# EUROPÄISCHE PATENTANMELDUNG

(11) **EP 4 800 891 A1**
(43) Veröffentlichungstag der Anmeldung: **02.09.2026**
(21) Anmeldenummer: 26160233.8
(22) Anmeldetag: 24.02.2026
(51) Int. Cl.: H02K 5/24, H02K 7/08

(54) **ELEKTROMOTOR**

(30) Priorität: 28.02.2025 DE 102025107690; 06.08.2025 DE 102025131265
(71) Anmelder: Igarashi Motoren GmbH, 90559 Burgthann-Ezelsdorf (DE)
(72) Erfinder: Kutsch, Andreas, 90480 Nürnberg (DE)
(74) Vertreter: Rau, Schneck & Hübner Patentanwälte Rechtsanwälte PartGmbB

(57) **Zusammenfassung**

Ein Elektromotor umfasst ein rohrförmiges Gehäuse (2) mit Stirnseitendeckeln (4, 6), jeweils ein an den Stirnseitendeckeln (4, 6) gehaltenes Drehlager (8, 9), eine eine Drehachse (11) aufweisende Motorwelle (10), die in den Drehlagern (8, 9) drehbar bezüglich ihrer Drehachse (10) gelagert ist, sowie ein Federelement (19) zum Aufbringen einer Federkraft auf die Motorwelle (10), wobei die Federkraft eine Kraftkomponente in radialer Richtung bezüglich der Drehachse (11) aufweist.

## Beschreibung

Die vorliegende Patentanmeldung nimmt die Prioritäten der deutschen Patentanmeldungen DE 10 2025 107 690.1 und DE 10 2025 131 265.6 in Anspruch, deren Inhalte durch Bezugnahme hierin aufgenommen werden.

Die Erfindung betrifft einen Elektromotor.

Elektromotoren werden beispielsweise in Spindelantrieben verwendet, um eine Klappenverstellung zu realisieren. Eine derartige Klappe ist beispielsweise eine Heckklappe in einem Automobil. Es wurde gefunden, dass bei der Klappenverstellung unerwünschte Geräuschprobleme auftreten können.

Der Erfindung liegt die Aufgabe zugrunde, die Geräuschentwicklung bei einer elektromotorisch betriebenen Klappenverstellung zu minimieren.

Diese Aufgabe ist erfindungsgemäß gelöst durch einen Elektromotor mit den im Anspruch 1 angegebenen Merkmalen, durch einen Spindelantrieb mit den im Anspruch 12 angegebenen Merkmalen und durch eine Klappenanordnung mit den im Anspruch 13 angegebenen Merkmalen.

Es wurde erkannt, dass ein zwischen Motorwelle und Drehlager in einem Elektromotor vorhandenes Spiel, das auch als Lagerluft bezeichnet wird und wenige µm betragen kann, insbesondere in einem unbelasteten Zustand der Motorwelle zu einem undefinierten Lastzustand führen kann, so dass sich bei einer Betätigung der Motorwelle ein Ungleichlauf aufschaukeln und Schwingungen verursachen kann. Diese Schwingungen, die insbesondere abhängig vom Einbauzustand des Elektromotors, insbesondere eines Spindelantriebs, sind, können störende Geräusche verursachen. Erfindungsgemäß wurde erkannt, dass ein definierter Lastzustand dadurch erzeugt werden kann, dass mittels eines Federelements eine radiale Federkraft auf die Motorwelle aufgebracht wird. Undefinierte Schwingungen der Motorwelle und davon verursachte Geräusche werden vermieden. Der Elektromotor dient insbesondere für die Anwendung in einem Spindelantrieb und insbesondere für eine Klappenanordnung.

Der Elektromotor weist ein rohrförmiges Gehäuse auf. Das Gehäuse weist eine Gehäuselängsachse auf. Das Gehäuse ist insbesondere im Wesentlichen zylindrisch ausgeführt. Das Gehäuse weist Stirnseitendeckel auf. Die Stirnseitendeckel können einteilig am Gehäuse angeformt und/oder jeweils als separates Element mit dem Gehäuse verbunden sein. An den Stirnseitendeckeln ist jeweils ein Drehlager gehalten, in dem die Motorwelle um ihre Drehachse drehbar gelagert ist.

Das Federelement ist insbesondere aus einem Kunststoffmaterial hergestellt, insbesondere aus thermoplastischem Kunststoffmaterial, insbesondere aus Polyetheretherketon (PEEK).

Das Federelement ist insbesondere scheibenartig ausgeführt. Das Federelement ist insbesondere eben ausgeführt, insbesondere als flache Scheibe. Das Federelement ist dazu ausgeführt, eine Federkraft bereitzustellen, die in einer von dem Federelement vorgegebenen Ebene orientiert ist. Die Federkraft ist insbesondere quer und insbesondere senkrecht zur Drehachse der Motorwelle orientiert.

Ein Elektromotor gemäß Anspruch 2 ist robust, also stabil, und platzsparend realisiert.

Ein Elektromotor gemäß Anspruch 3 ermöglicht eine vorteilhafte Einbringung der Federkraft auf die Motorwelle. Insbesondere liegt dem zugrunde, dass am Abtrieb der Motorwelle ein Getriebe gekoppelt sein kann, das dazu führt, dass die Motorwelle in dem abtriebsseitigen Drehlager im Wesentlichen lastfrei angeordnet ist. Diese Lastfreiheit kann einen undefinierten Zustand im Drehlager bewirken, so dass die unerwünschte Geräuschentwicklung auftritt. Mit der entsprechenden Anordnung des Federelements ist dies verhindert.

Die Ausführung des Federelements gemäß Anspruch 4 ist kleinbauend und langlebig. Die Ausführung des Federelements als Federscheibe aus einem Kunststoffmaterial ist kosteneffizient.

Eine Anbringung der Federscheibe gemäß Anspruch 5 ist besonders materialschonend. Die Federscheibe ist an dem Drehlager zuverlässig aufgenommen und daran gehalten. Eine mechanische Beanspruchung der Federscheibe infolge ihrer Montage am Drehlager ist minimiert.

Alternativ kann die Federscheibe gemäß Anspruch 6 auch entlang der Drehachse benachbart zu dem Drehlager angeordnet sein. Insbesondere ist die Federscheibe stirnseitig an einer Stirnfläche des Drehlagers angeordnet. Die Stirnfläche des Drehlagers ist insbesondere eben, insbesondere vorsprungsfrei und insbesondere ohne Stirnseitenausnehmung ausgeführt. Die Federscheibe ist axial großflächig und zuverlässig an dem Drehlager abgestützt. Das Drehlager selbst kann, insbesondere als Scheibe, unkompliziert ausgeführt und insbesondere ein Standardbauteil sein. Die Montage der Federscheibe am Drehlager ist vereinfacht. Das Risiko unerwünschter akustischer Auffälligkeiten ist reduziert.

Die Ausgestaltung der Federscheibe gemäß Anspruch 7 gewährleistet einen definierten Radialversatz. Mittels des Federelements wird eine, insbesondere permanente, elastische Federkraft auf die Motorwelle ausgeübt. Die Federscheibe weist eine Außenkontur auf mit einem Außenkontur-Mittelpunkt. Die Außenkontur ist insbesondere kreisförmig. Die Federscheibe weist ferner eine Innenkontur auf mit einem Innenkontur-Mittelpunkt. Die Innenkontur ist insbesondere größtenteils kreisförmig. Ein in einer senkrecht zur Drehachse orientierten Ebene angeordneter Radialabstand der Mittelpunkte beträgt mindestens 1 % des Durchmessers der Motorwelle, insbesondere mindestens 2 %, insbesondere mindestens 3 %, insbesondere mindestens 4 % und insbesondere mindestens 4,5 %. Insbesondere beträgt der Abstand der Mittelpunkte zueinander höchstens 7,5 %, insbesondere höchstens 6 % und insbesondere höchstens 5 %. Der Radialabstand der Mittelpunkte beträgt insbesondere mindestens 0,05 mm, insbesondere 0,1 mm und insbesondere 0,15 mm. Der Radialabstand beträgt insbesondere höchstens 0,25 mm, insbesondere höchstens 0,20 mm und insbesondere höchstens 0,15 mm.

Die Ausführung der Federscheibe mit mindestens einem Federarm gemäß Anspruch 8 ermöglicht eine vorteilhafte Kraftaufbringung auf die Motorwelle. Der mindestens eine Federarm ist insbesondere elastisch und wirkt in radialer Richtung bezüglich der Drehachse der Motorwelle. Der Federarm weist eine in radialer Richtung bezüglich der Drehachse orientierte Armbreite auf, die mindestens 5 %, insbesondere mindestens 10 %, insbesondere mindestens 15 % und insbesondere mindestens 17,5 % des Durchmessers der Außenkontur der Federscheibe beträgt. Die Armbreite ist vergleichsweise groß und ermöglicht eine robuste Kraftaufbringung des Federarms auf die Motorwelle. Der mindestens eine Federarm weist eine Federarmlänge auf, die sich entlang der Umfangsrichtung um die Drehachse erstreckt. Die Federarmlänge beträgt insbesondere mindestens 20°, insbesondere mindestens 30°, insbesondere mindestens 45°, insbesondere mindestens 60°, insbesondere mindestens 65° und insbesondere mindestens 70° bezogen auf eine Umfangsrichtung um die Drehachse der Motorwelle. Insbesondere ist dadurch gewährleistet, dass die Federscheibe einer ausreichenden Zyklenzahl Stand hält, so dass die Gesamtlebensdauer des Elektromotors durch die Verwendung der Federscheibe nicht limitiert ist. Der Elektromotor ist mechanisch robust ausgeführt. Besonders vorteilhaft ist, dass der mindestens eine Federarm ein freiliegendes Federarmende aufweist.

Ein Elektromotor gemäß Anspruch 9 gewährleistet eine vorteilhafte Federkraftaufbringung auf die Motorwelle.

Ein Elektromotor gemäß Anspruch 10 vereinfacht die Aufbringung der federnden Rückstellkraft. Dadurch, dass an der Rückseite des Federarms eine Elastungsausnehmung angeordnet ist, ist eine elastische Auslenkung des Federarms vereinfacht.

Eine Federscheibe mit zwei Federarmen gemäß Anspruch 11 hat sich als besonders vorteilhaft bezüglich der Federkraftaufbringung erwiesen. Insbesondere ist es dadurch möglich, eine zentrierende und symmetrisch einwirkende Federkraft auf die Motorwelle aufzubringen. Die Entwicklung störender Motorgeräusche ist zusätzlich reduziert.

Ein Spindelantrieb gemäß Anspruch 12 weist im Wesentlichen die Vorteile des Elektromotors auf, worauf hiermit verwiesen wird.

Eine Klappenanordnung gemäß Anspruch 13 weist im Wesentlichen die Vorteile des Spindelantriebs auf.

Sowohl die in den Patentansprüchen angegebenen Merkmale als auch die in den nachfolgenden Ausführungsbeispielen des erfindungsgemäßen Elektromotors angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstandes keine Einschränkung dar, sondern weisen im Wesentlichen lediglich beispielshaften Charakter auf.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: einen Längsschnitt durch einen erfindungsgemäßen Elektromotor,
- Fig. 2: eine vergrößerte Draufsicht auf ein als Federscheibe ausgeführtes Federelement des Elektromotors gemäß Fig. 1,
- Fig. 3: eine Schnittdarstellung gemäß Schnittlinie III-III in Fig. 1,
- Fig. 4: eine vergrößerte Längsschnittdarstellung entsprechend Fig. 1 gemäß einem weiteren Ausführungsbeispiel, bei dem die Federscheibe benachbart zu dem Drehlager angeordnet ist,
- Fig. 5: eine Fig. 2 entsprechende Ansicht der Federscheibe gemäß Fig. 4.

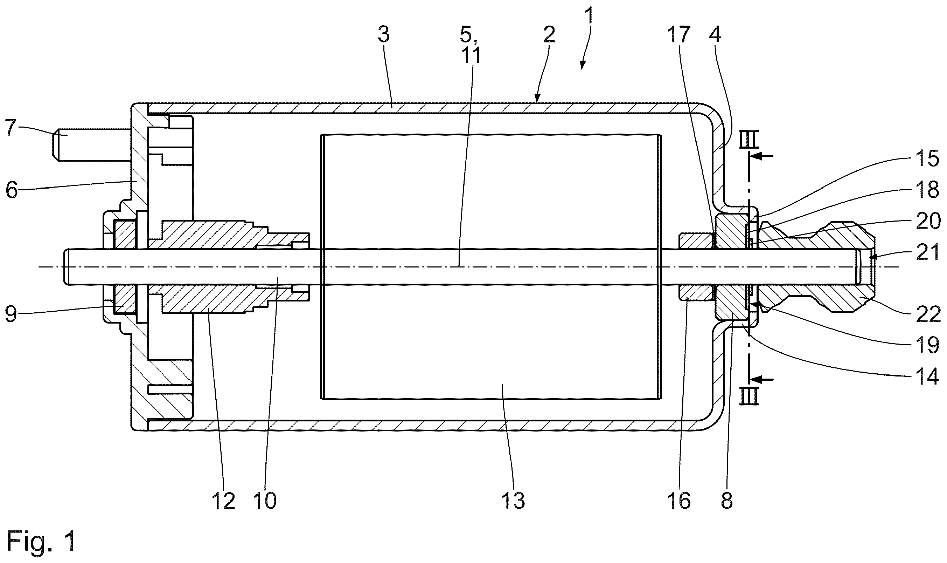

Ein in Fig. 1 dargestellter Elektromotor 1 dient insbesondere zur Betätigung eines Spindelantriebs, insbesondere für die Verstellung einer Klappe einer Klappenanordnung. Eine derartige Klappenanordnung weist insbesondere ein Gehäuse und eine bezüglich des Gehäuses verstellbare Klappe auf. Eine Klappenanordnung ist insbesondere ein Kraftfahrzeug mit einer Heckklappe.

Der Elektromotor 1 umfasst ein Gehäuse 2, das gemäß dem gezeigten Ausführungsbeispiel als Gehäusegrundkörper 3 mit einteilig angeformtem Stirnseitendeckel 4 ausgeführt ist. Das Gehäuse 2 ist im Wesentlichen hohlzylindrisch ausgeführt. Das Gehäuse 2 ist rohrförmig ausgeführt. Das Gehäuse 2 weist eine Gehäuselängsachse 5 auf.

An dem dem angeformten Stirnseitendeckel 4 gegenüberliegenden Ende ist der Gehäusegrundkörper 3 mit einer Öffnung ausgeführt. Diese Öffnung ist mittels eines weiteren Stirnseitendeckels 6, der auf die Öffnung aufgesetzt und am Gehäusegrundkörper 3 befestigt ist, verschlossen. Der Stirnseitendeckel 6 ist separat vom Gehäuse 2 ausgeführt und mit dem Gehäuse 2 fest verbunden. An dem Stirnseitendeckel 6 ist ein elektrischer Anschluss 7 angeordnet.

An den beiden Stirnseitendeckeln 4, 6 ist jeweils ein Drehlager 8, 9 angeordnet. Die beiden Drehlager 8, 9 sind fest in dem jeweiligen Stirnseitendeckel 4, 6 gehalten und insbesondere darin integriert angeordnet. Die beiden Drehlager 8, 9 sind insbesondere jeweils konzentrisch bezüglich der Gehäuselängsachse 5 und insbesondere konzentrisch zueinander am Gehäuse 2 angeordnet.

In dem Gehäuse 2 sind die wesentlichen Funktionskomponenten des Elektromotors 1 angeordnet. In dem Gehäuse 2 ist eine Motorwelle 10 angeordnet, die in den beiden Drehlagern 8, 9 drehbar bezüglich ihrer Drehachse 11 gelagert angeordnet ist.

Drehfest mit der Motorwelle 10 sind ein Kommutator 12 und ein Rotor 13 verbunden. Der Kommutator 12 ist an dem antriebsseitigen Ende der Motorwelle 10 benachbart zu dem Stirnseitendeckel 6 angeordnet. Der Rotor 13 ist in axialer Richtung an der Motorwelle 10 zwischen dem Kommutator 12 und dem einteilig angeformten Stirnseitendeckel 4 angeordnet.

Das Drehlager 8, das in dem einteilig angeformten Stirnseitendeckel 4 angeordnet ist, ist insbesondere axial vorgespannt eingebaut. Dazu weist der Stirnseitendeckel 4 einen einteilig angeformten Kragen 14 auf, der als Axialaufnahme für das Drehlager 8 dient. Als Axialanschlag des Kragens 14 dient ein umgebördelter Ringbund 15. Das Drehlager 8 ist gegen den Ringbund 15 mittels einer Hülse 16 axial gedrückt. Die Hülse 16 ist fest an der Motorwelle 10 gehalten. In axialer Richtung ist zwischen der Hülse 16 und dem Drehlager 8 eine erste, innenliegende Anlaufscheibe 17 angeordnet. An einer gegenüberliegenden Stirnseite des Drehlagers 8 ist in einer entsprechenden Stirnseitenausnehmung 18 des Drehlagers 8 ein Federelement in Form einer Federscheibe 19 angeordnet. Das Federelement 19 ist in der Stirnseitenausnehmung 18 mittels einer zweiten Anlaufscheibe 20 axial gehalten.

An dem abtriebsseitigen Ende 21 der Motorwelle 10 ist ein Drehmoment-übertragungselement 22 in Form eines Ritzels angeordnet und insbesondere drehfest mit der Motorwelle 10 verbunden. Das Drehmomentübertragungselement 22 dient zur Drehmomentübertragung einer Drehbewegung des Elektromotors 1 auf ein nicht dargestelltes Getriebe und/oder einen Spindelantrieb.

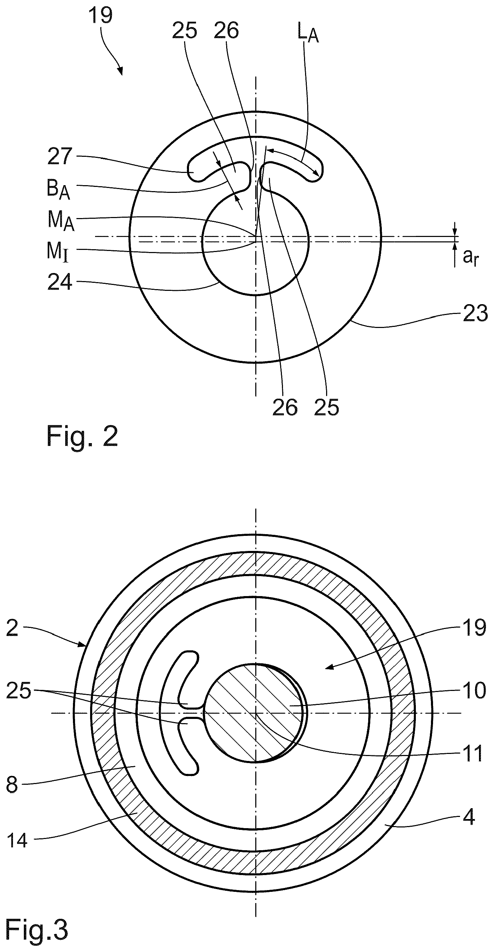

Nachfolgend werden anhand von Fig. 2 und 3 Aufbau und Funktion des Federelements 19 näher erläutert.

Die Federscheibe ist als Kunststoffscheibe insbesondere aus PEEK, einteilig hergestellt. Die Federscheibe weist insbesondere eine Scheibendicke auf, die zwischen 0,2 mm und 0,4 mm, insbesondere zwischen 0,25 mm und 0,35 mm und insbesondere 0,3 mm beträgt. Die Federscheibe weist eine kreisförmige Außenkontur 23 auf, die einen Außenkontur-Mittelpunkt M_{A} definiert. Die Außenkontur 23 kann auch unrund ausgeführt sein, insbesondere polygonartig, insbesondere viereckig.

Die Federscheibe weist ferner eine Innenkontur 24 auf, die gemäß dem gezeigten Ausführungsbeispiel im Wesentlichen kreisförmig ausführt ist. Die Kreisform der Innenkontur 24 erstreckt sich über einen Umfangswinkel von mindestens 350°, insbesondere von mindestens 355° und insbesondere von mindestens 358°. Die Innenkontur 24 definiert einen Innenkontur-Mittelpunkt M_{I}, der in einer zur Drehachse 11 senkrecht orientierten Ebene einen Radialabstand aᵣ zum Außenkontur-Mittelpunkt M_{A} aufweist. Gemäß dem gezeigten Ausführungsbeispiel beträgt der Radialabstand aᵣ 0,15 mm.

Die Federscheibe ist im Wesentlichen als Ringscheibe ausgeführt mit kreisförmiger Außenkontur 23 und kreisförmiger Innenkontur 24, die exzentrisch zueinander angeordnet sind.

Angrenzend an die Innenkontur 24 weist die Federscheibe zwei Federarme 25 auf, die jeweils einteilig an der Federscheibe angeformt sind. Die Federarme 25 weisen jeweils eine Armbreite B_{A} auf, die in radialer Richtung bezüglich der Drehachse 11 orientiert ist. Die Federarme weisen jeweils eine Umfangsrichtung orientierte Armlänge L_{A} auf.

Gemäß dem gezeigten Ausführungsbeispiel sind die Federarme 25 einander zugewandt und weisen jeweils ein freies Ende 26 auf. Die beiden freien Enden 26 sind einander gegenüberliegend in Umfangsrichtung angeordnet. Zwischen den beiden freien Enden 26 ist ein Radialdurchbruch von der Innenkontur zu einer Entlastungsausnehmung 27 gebildet.

Die Einbausituation des Drehlagers 8 mit dem Federelement 19 ist insbesondere in Fig. 3 dargestellt. Das Drehlager 8 ist in dem Gehäuse 2 konzentrisch bezüglich der Gehäuselängsachse 5 angeordnet. Die Stirnseitenausnehmung 18 ist an dem Drehlager 8 ebenfalls konzentrisch bezüglich der Gehäuselängsachse 5 ausgebildet. Der Innendurchmesser der Stirnseitenausnehmung 18 korrespondiert mit der Außenkontur 23 des Federelements 19. Das Federelement 19 ist formschlüssig in der Stirnseitenausnehmung 18 gehalten.

Dadurch, dass der Innenkontur-Mittelpunkt M_{I} mit dem Radialabstand aᵣ gegenüber dem Außenkontur-Mittelpunkt M_{A} angeordnet ist, ist die Innenkontur 24 exzentrisch bezüglich der Gehäuselängsachse 5 mit einem Versatz in Größe des Radialabstandes aᵣ angeordnet. Insbesondere ist die Exzentrizität derart angeordnet, dass die Motorwelle 10 gegen die Federarme 25 in radialer Richtung bezüglich der Drehachse 11 gedrückt wird. Durch die Auslenkung der Federarme 25 üben diese eine elastische Rückstellkraft, also eine Federkraft, auf die Motorwelle 10 aus. Die Federkraft ist in radialer Richtung und insbesondere in Richtung der Drehachse 11 der Motorwelle 10 orientiert. Durch diese permanente Federkraft wird ein definierter Lastzustand für die Motorwelle 10 erzeugt, insbesondere auch für den Fall, dass durch eine Kopplung an ein Getriebe ein lastfreier Zustand erzeugt worden ist. Die Anordnung der Motorwelle 10 in Gehäuse 2 ist stabilisiert.

In einer Ebene senkrecht zur Drehachse 11, die der Zeichnungsbene gemäß Fig. 2 entspricht, definiert der Radialabstand aᵣ eine Richtung für den Abstand von dem Innenkontur-Mittelpunkt M_{I} zu dem Außenkontur-Mittelpunkt M_{A}. Besonders vorteilhaft ist es, wenn entlang dieser Richtung der Radialdurchbruch zwischen den freien Enden 26 der Federarme 25 angeordnet ist. Insbesondere ist der Außenkontur-Mittelpunkt M_{A} mit einem geringeren Abstand zu den Federarmen 25 angeordnet als der Innenkontur-Mittelpunkt M_{I}. Insbesondere ist die Innenkontur 24 bezüglich des Außenkontur-Mittelpunkts M_{A} exzentrisch angeordnet. Die Exzentrizität ist insbesondere derart, dass die Motorwelle 10 an den Federarmen 25 anliegt und die Federarme 25 dadurch elastisch ausgelenkt werden.

Dadurch, dass die Radialkraft eine elastische Rückstellkraft ist, wird die Federkraft an die individuellen Gegebenheiten in dem Elektromotor 1 angepasst. Insbesondere ist dadurch eine individuelle Anpassung an Toleranzabweichungen möglich. Der Elektromotor 1 und insbesondere das Federelement 19 sind fehlertolerant ausgeführt.

Die Stirnseitenausnehmung 18 weist eine Tiefe auf, die sich entlang der Gehäuselängsachse 5 erstreckt, die im Wesentlichen der Dicke der Federscheibe 19 entspricht. Die Federscheibe 19 in axialer Richtung zuverlässig in der Stirnseitenausnehmung 18 angeordnet und durch die zweite Anlaufscheibe 20 gehalten. Eine unerwünschte Axialbewegung der Federscheibe 19 bezüglich des Drehlagers 8 ist verhindert. Insbesondere ist die Federscheibe 19 mit einer axialen Presspassung in der Stirnseitenausnehmung 18 des Drehlagers 8 gehalten.

Gemäß dem gezeigten Ausführungsbeispiel beträgt die Federkraft 15 N pro Federarm 25. Der Betrag der Federkraft kann durch geometrische Anpassung der Federarme 25 veränderlich festgelegt werden. Wesentlich für die Federkraft sind die Anzahl der Federarme 25, die Armbreite, die Armlänge und insbesondere auch die Scheibendicke sowie das für die Herstellung der Scheibe verwendete Material.

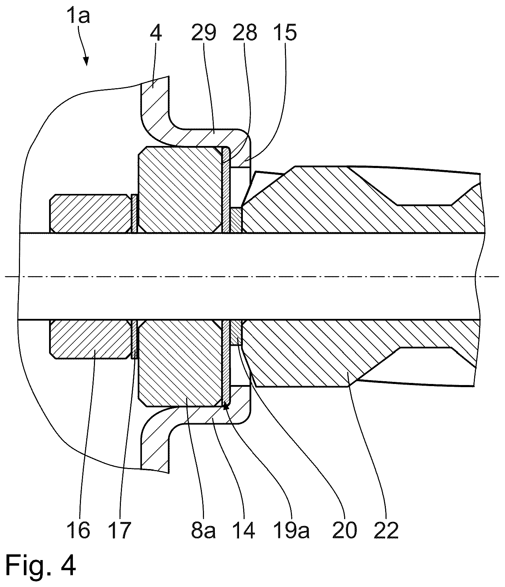

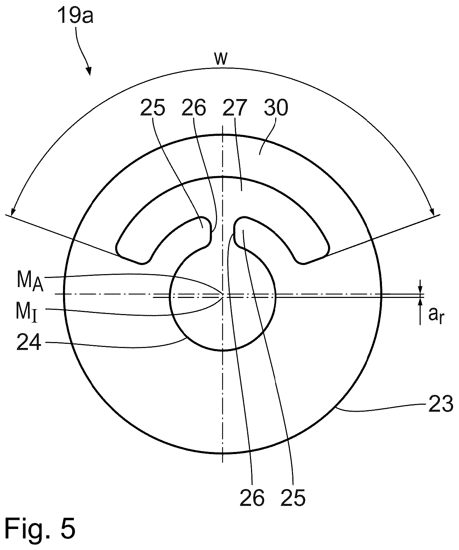

Im Folgenden wird unter Bezugnahme auf Fig. 4 und 5 ein weiteres Ausführungsbeispiel eines Elektromotors beschrieben. Konstruktiv identische Bauteile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Wesentlicher Unterschied bei dem Elektromotor 1a ist, dass das Federelement 19a nicht in einer Stirnseitenausnehmung, sondern benachbart an einer Stirnfläche 28 des Drehlagers 8a angeordnet ist. Das Federelement 19a liegt insbesondere stirnseitig an der Stirnfläche 28 an. Die Stirnfläche 28 ist insbesondere eben und insbesondere durchgängig und insbesondere vorsprungsfrei ausgeführt.

Das Federelement 19a weist einen Außendurchmesser auf, der im Wesentlichen dem Außendurchmesser des Drehlagers 8a entspricht. Der Außendurchmesser von Federscheibe 19a und Drehlager 8a entspricht im Wesentlichen dem Innendurchmesser des Kragens 14.

Die Anordnung des Federelements 19a an dem Drehlager 8a ist unkompliziert. Das Federelement 19a ist axial entlang der Drehachse 11 zwischen dem Drehlager 8a und dem Ringbund 15 des Kragens 14 gehalten.

Bezüglich des Federelements 19a selbst ist anzumerken, dass aufgrund des größeren Außendurchmessers des Federelements 19a sowohl die radiale Breite der Entlastungsausnehmungen 27 als auch der die Entlastungsausnehmungen 27 radial begrenzende Außensteg 30 in radialer Richtung größer ausgeführt sind. Das Federelement 19a ist mechanisch robust ausgeführt und für die Aufnahme der mechanischen Schwingungen ausreichend stabil. Ein durch die Entlastungsausnehmungen definierter Öffnungswinkel w ist gegenüber dem ersten Ausführungsbeispiel vergrößert und beträgt mindestens 90°, insbesondere mindestens 120° und insbesondere 140°.

## Patentansprüche

1. Elektromotor umfassend
a. ein rohrförmiges Gehäuse (2) mit Stirnseitendeckeln (4, 6),
b. jeweils ein an den Stirnseitendeckeln (4, 6) gehaltenes Drehlager (8; 8a, 9),
c. eine eine Drehachse (11) aufweisende Motorwelle (10), die in den Drehlagern (8; 8a, 9) drehbar bezüglich ihrer Drehachse (10) gelagert ist,
d. ein Federelement (19; 19a) zum Aufbringen einer Federkraft auf die Motorwelle (10), wobei die Federkraft eine Kraftkomponente in radialer Richtung bezüglich der Drehachse (11) aufweist.

2. Elektromotor gemäß Anspruch 1, **dadurch gekennzeichnet, dass** das Federelement (19; 19a) an einem der Drehlager (8; 8a, 9) angeordnet ist.

3. Elektromotor gemäß einem der vorstehenden Ansprüche, **dadurch gekennzeichnet, dass** das Federelement (19; 19a) abtriebsseitig (21) an der Motorwelle (10) angeordnet ist.

4. Elektromotor gemäß einem der vorstehenden Ansprüche, **dadurch gekennzeichnet, dass** das Federelement (19; 19a) als Federscheibe ausgeführt ist.

5. Elektromotor gemäß Anspruch 4, **dadurch gekennzeichnet, dass** die Federscheibe an dem Drehlager (8) in einer Stirnseitenausnehmung (18) angeordnet ist.

6. Elektromotor gemäß Anspruch 4, **dadurch gekennzeichnet, dass** die Federscheibe benachbart zu dem Drehlager (8a) angeordnet ist und insbesondere stirnseitig an einer Stirnfläche (28) des Drehlagers (8a) angeordnet ist.

7. Elektromotor gemäß einem der Ansprüche 4 bis 6, **dadurch gekennzeichnet, dass** die Federscheibe eine einen Außenkontur-Mittelpunkt (M_{A}) definierende Außenkontur (23) und eine einen Innenkontur-Mittelpunkt (M_{I}) definierende Innenkontur (24) aufweist, wobei der Außenkontur-Mittelpunkt (M_{A}) in einer Ebene senkrecht zur Drehachse (11) mit einem Radialabstand (aᵣ) zum Innenkontur-Mittelpunkt (M_{I}) angeordnet ist.

8. Elektromotor gemäß einem der Ansprüche 4 bis 7, **dadurch gekennzeichnet, dass** die Federscheibe mindestens einen Federarm (25) aufweist, der einstückig an der Federscheibe angeformt ist.

9. Elektromotor gemäß Anspruch 8, **dadurch gekennzeichnet, dass** der Federarm (25) an die Innenkontur (24) angrenzt.

10. Elektromotor gemäß Anspruch 8 oder 9, **dadurch gekennzeichnet, dass** an einer der Innenkontur (24) gegenüberliegenden Rückseite des Federarms (25) eine Entlastungsausnehmung (27) angeordnet ist.

11. Elektromotor gemäß einem der Ansprüche 8 bis 10, **dadurch gekennzeichnet, dass** die Federscheibe zwei Federarme (25) aufweist, die sich in Umfangsrichtung bezüglich der Drehachse (11) erstrecken und einander zugewandt angeordnet sind.

12. Spindelantrieb mit einem Elektromotor (1) gemäß einem der vorstehenden Ansprüche, mit einer von dem Elektromotor (1) angetriebenen Spindel und insbesondere mit einem Getriebe, das insbesondere in Drehmomentübertragungsrichtung zwischen dem Elektromotor (1) und der Spindel angeordnet ist.

13. Klappenanordnung mit einem Gehäuse, einer an dem Gehäuse angeordneten Klappe und einem Spindelantrieb gemäß Anspruch 12 zum Verstellen der Klappe an dem Gehäuse.
